(19) **Europäisches Patentamt / European Patent Office / Office européen des brevets**

(11) **EP 2 990 998 B1**

(12) **EUROPEAN PATENT SPECIFICATION**

(45) Date of publication and mention of the grant of the patent:
**17.01.2018 Bulletin 2018/03**

(51) Int Cl.:
**G06K 9/00** *(2006.01)* **G06K 9/46** *(2006.01)*

(21) Application number: **15182853.0**

(22) Date of filing: **28.08.2015**

(54) **METHOD AND DEVICE FOR ASSESSING DAMAGE IN DISASTER AREA**

VERFAHREN UND VORRICHTUNG ZUR BEURTEILUNG VON SCHÄDEN IN EINEM KATASTROPHENGEBIET

PROCÉDÉ ET DISPOSITIF POUR ÉVALUER DES DOMMAGES DANS UNE ZONE SINISTRÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.08.2014 CN 201410437073**

(43) Date of publication of application:
**02.03.2016 Bulletin 2016/09**

(73) Proprietor: **Institute of Electronics, Chinese Academy of Sciences Beijing (CN)**

(72) Inventors:
- **Deng, Yunkai**
  **100190 Beijing (CN)**
- **Wang, Yu**
  **100190 Beijing (CN)**
- **Wang, Chunle**
  **100190 Beijing (CN)**
- **Li, Ning**
  **100190 Beijing (CN)**

(74) Representative: **Gulde & Partner Patent- und Rechtsanwaltskanzlei mbB Wallstraße 58/59 10179 Berlin (DE)**

(56) References cited:
**CN-A- 103 729 853     CN-A- 103 761 740**

- **D. Landgrebe: "Signal Theory Methods in Multispectral Remote Sensing", 2003, Wiley, XP002752954, pages 381-388, * page 381 - page 388 ***
- **HARALICK R M: "ON A TEXTURE-CONTEXT FEATURE EXTRACTION ALGORITHM FOR REMOTELY SENSED IMAGERY", PROCEEDINGS OF IEEE SYMPOSIUM ON ADAPTIVE PROCESSES DECISION ANDCONTROL, XX, XX, 15 December 1971 (1971-12-15), pages 650-657, XP008069269,**
- **HARALICK R M: "STATISTICAL AND STRUCTURAL APPROACHES TO TEXTURE", PROCEEDINGS OF THE IEEE, IEEE. NEW YORK, US, vol. 67, no. 5, 1 May 1979 (1979-05-01), pages 786-804, XP001149154, ISSN: 0018-9219**

**EP 2 990 998 B1**

**Description**

**TECHNICAL FIELD**

The present disclosure relates to SAR image processing techniques, and in particular to a method and device for assessing damage in a disaster area.

**BACKGROUND**

Damage assessment in a disaster area is a key aspect of Synthetic Aperture Radar (SAR) image application. Due to their all weather and all time capability, SARs will not be affected by external environment factors such as bad weathers, thus SARs play an important role in emergency rescue in a disaster area.

During rescue in a disaster area hit by a natural disaster, damage assessment in the disaster area is a significant step that concerns overall direction of the rescue and allocation of disaster relief materials. Generally, damage assessment can be made by comparing a post-event image and a pre-event image of the disaster area.

However, natural disasters generally occur in remote areas where there are no pre-event SAR images, thus damage assessment in remote disaster areas cannot be made by comparing a post-event image and a pre-event image thereof.

Prior art documents assessing damage in satellite images include CN103761740 and CN103729853.

**SUMMARY**

In order to solve the above technical problem, embodiments of the disclosure are intended to provide a method and device for assessing damage in a disaster area, which can assess damage in the disaster area using a single post-event Very High Resolution (VHR) SAR image of the disaster area.

The technical solutions of the disclosure are implemented as follows.

According to a first aspect, an embodiment of the disclosure is intended to provide a method for assessing damage in a disaster area, and the method includes:

a captured post-event Very High Resolution (VHR) Synthetic Aperture Radar (SAR) image of the disaster area is divided into at least one sub-image region;
a Gray Level Co-occurrence Matrix (GLCM) corresponding to an *ith* sub-image region is acquired, and at least one texture feature value of the *ith* sub-image region is acquired according to the GLCM;
texture feature value levels corresponding to respective texture feature values of the ith sub-image region are determined according to a preset ranking strategy; and
a damage level of the ith sub-image region is acquired according to the texture feature value levels corresponding to respective texture feature values of the ith sub-image region and preset weights of respective texture feature values.

In an embodiment, the step that a captured post-event VHR SAR image of the disaster area is divided into at least one sub-image region may include:

a main road network in the VHR SAR image is extracted according to road features of the VHR SAR image; and
the VHR SAR image is divided into at least one sub-image region according to the main road network in the VHR SAR image.

In an embodiment, the GLCM P corresponding to the ith sub-image region may be acquired through:

$$p_i(x, y) = N / M$$

where $p_i(x, y)$ is an element in row x and column *y* of the GLCM P corresponding to the ith sub-image region and represents a probability of gray levels of two adjacent pixels in the ith sub-image region being x and *y* sequentially, *N* is an occurrence number of gray levels of two adjacent pixels in the ith sub-image region being *x* and *y* sequentially, and M is the total number of pixels in the ith sub-image region;
wherein the at least one texture feature value of the ith sub-image region comprises the contrast, homogeneity and entropy of the ith sub-image region.

In an embodiment, the step that at least one texture feature value of the ith sub-image region is acquired according to the GLCM may include:

the contrast *CON of* the ith sub-image region is acquired according to the GLCM *P* and through:

$$CON = \sum_{x=1}^{NP} \sum_{y=1}^{NP} p(x, y) \cdot (x - y)^2$$

where x is a row number of the GLCM P; *y* is a column number of the GLCM P, NP is the number of rows or columns of the GLCM P, and *p(x, y)* is an element in row x and column *y* of the GLCM P;
the homogeneity *IDM* of the ith sub-image region is acquired according to the GLCM P and through:

$$IDM = \sum_{x=1}^{NP} \sum_{y=1}^{NP} p(x, y) \cdot \frac{1}{1 + (x - y)^2}$$

where x is a row number of the GLCM P; *y* is a column number of the GLCM P, NP is the number of rows or columns of the GLCM P, and *p(x, y)* is an element in row *x* and column *y* of the GLCM *P*;
the entropy *ENT of* the ith sub-image region is acquired according to the GLCM *P* and through:

$$ENT = -\sum_{x=1}^{NP} \sum_{y=1}^{NP} p(x, y) \cdot \ln p(x, y)$$

where x is a row number of the GLCM *P, y* is a column number of the GLCM *P,* NP is the number of rows or columns of the GLCM *P, p(x, y)* is an element in row x and column *y* of the GLCM *P,* and ln *p(x, y)* represents calculation of the natural logarithm of *p(x, y)*.

In an embodiment, the step that a damage level of the ith sub-image region is acquired according to the texture feature value levels corresponding to respective texture feature values of the ith sub-image region and preset weights of respective texture feature values may include:

the texture feature value levels corresponding to respective texture feature values of the ith sub-image region are weighted by corresponding preset weights and then summed to acquire the damage level of the ith sub-image region.

According to a second aspect, an embodiment of the disclosure provides a device for assessing damage in a disaster area, the device comprising a division unit, a first acquisition unit, a second acquisition unit, a determination unit and a third acquisition unit, wherein
the division unit is configured to divide a captured post-event Very High Resolution (VHR) Synthetic Aperture Radar (SAR) image of the disaster area into at least one sub-image region;
the first acquisition unit is configured to acquire a Gray Level Co-occurrence Matrix (GLCM) corresponding to an ith sub-image region;
the second acquisition unit is configured to acquire at least one texture feature value of the ith sub-image region according to the GLCM;
the determination unit is configured to determine, according to a preset ranking strategy, texture feature value levels corresponding to respective texture feature values of the ith sub-image region; and
the third acquisition unit is configured to acquire a damage level of the ith sub-image region according to the texture feature value levels corresponding to respective texture feature values of the ith sub-image region and preset weights of respective texture feature values.
In an embodiment, the division unit may be configured to:

extract a main road network in the VHR SAR image according to road features of the VHR SAR image; and
divide the VHR SAR image into at least one sub-image region according to the main road network in the VHR SAR image.

In an embodiment, the first acquisition unit may be configured to acquire the GLCM P corresponding to the ith sub-image region; through:

$$p_i(x, y) = N / M$$

where $p_i(xi, y)$ is an element in row x and column *y* of the GLCM P corresponding to the ith sub-image region and represents a probability of gray levels of two adjacent pixels in the ith sub-image region being *x* and *y* sequentially, *N* is an occurrence number of gray levels of two adjacent pixels in the ith sub-image region being x and *y* sequentially, and M is the total number of pixels in the ith sub-image region;

wherein the at least one texture feature value of the ith sub-image region comprises the contrast, homogeneity and entropy of the ith sub-image region.

In an embodiment, the second acquisition unit may be configured to:

acquire the contrast *CON of* the ith sub-image region according to the GLCM P and through:

$$CON = \sum_{x=1}^{NP} \sum_{y=1}^{NP} p(x, y) \cdot (x - y)^2$$

where x is a row number of the GLCM P; *y* is a column number of the GLCM P, NP is the number of rows or columns of the GLCM P, and *p(x, y)* is an element in row x and column *y* of the GLCM P;

and acquire the homogeneity *IDM* of the ith sub-image region according to the GLCM P and through:

$$IDM = \sum_{x=1}^{NP} \sum_{y=1}^{NP} p(x, y) \cdot \frac{1}{1 + (x - y)^2}$$

where x is a row number of the GLCM P; *y* is a column number of the GLCM P, NP is the number of rows or columns of the GLCM P, and *p(x, y)* is an element in row x and column *y* of the GLCM P;

and acquire the entropy *ENT of* the ith sub-image region according to the GLCM *P* and through:

$$ENT = -\sum_{x=1}^{NP} \sum_{y=1}^{NP} p(x, y) \cdot \ln p(x, y)$$

where x is a row number of the GLCM *P, y* is a column number of the GLCM *P,* NP is the number of rows or columns of the GLCM *P, p(x, y)* is an element in row x and column *y* of the GLCM *P,* and ln *p*(*x, y*) represents calculation of the natural logarithm of *p*(*x, y*).

In an embodiment, the third acquisition unit may be configured to weight the texture feature value levels corresponding to respective texture feature values of the ith sub-image region by corresponding preset weights and sum weighted texture feature value levels to acquire the damage level of the ith sub-image region.

The embodiments of the disclosure provide a method and device for assessing damage in a disaster area, using a change in image texture features caused by post-event damage in the disaster area, the method and device can assess damage in the disaster area through a single post-event VHR SAR image of the disaster area.

**BRIEF DESCRIPTION OF THE DRAWINGS**

Fig. 1 is a schematic flowchart of a method for assessing damage in a disaster area according to an embodiment of the disclosure;

Fig. 2 is a schematic diagram showing a VHR SAR image of place A after a natural disaster according to an embodiment of the disclosure;

Fig. 3 is a schematic diagram showing division of a sub-image region according to an embodiment of the disclosure;

and

Fig. 4 is a schematic structural diagram of a device for assessing damage in a disaster area according to an embodiment of the disclosure.

## DETAILED DESCRIPTION

The technical solutions in the embodiments of the disclosure will be described below clearly and completely with reference to the accompanying drawings.

The basic spirit of the embodiment of the disclosure lies in: damage in the disaster area is assessed using a change in image texture features caused by post-event damage in the disaster area, thus the method and device can assess damage in the disaster area through a single post-event VHR SAR image of the disaster area.

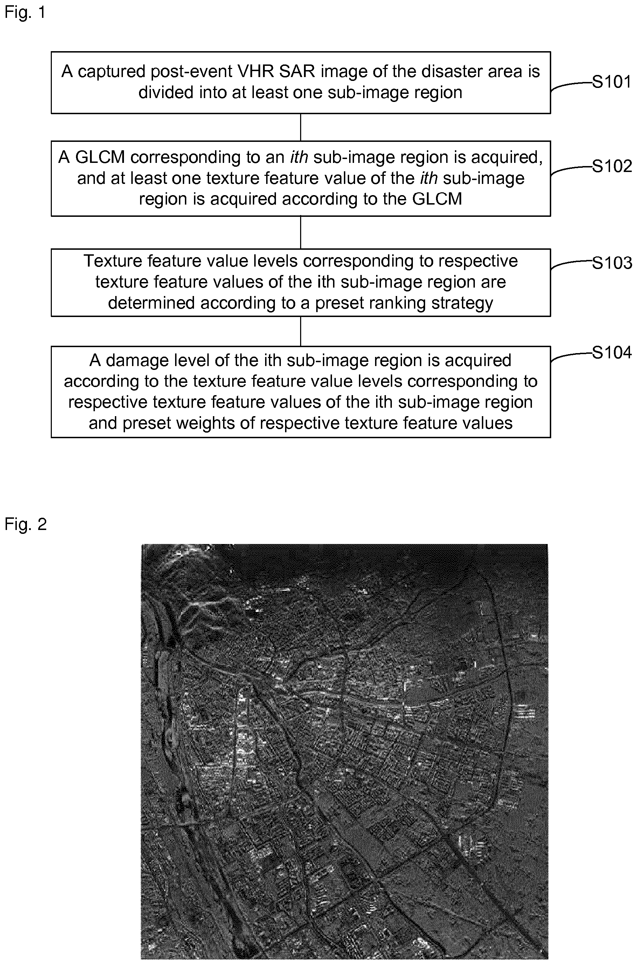

Referring to Fig. 1, it is a schematic flowchart of a method for assessing damage in a disaster area according to an embodiment of the disclosure, and the method may include:

S101, a captured post-event VHR SAR image of the disaster area is divided into at least one sub-image region;

Illustratively, S101 may specifically include:

a main road network in the VHR SAR image is extracted according to road features of the VHR SAR image; and the VHR SAR image is divided into at least one sub-image region according to the main road network in the VHR SAR image.

It should be noted that each sub-image region corresponds to a sub-area of the disaster area.

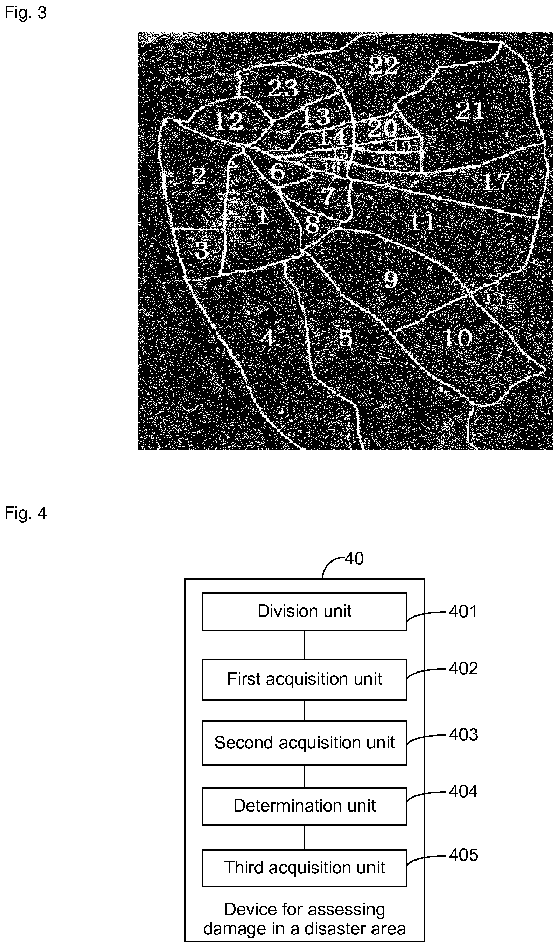

Specifically, the embodiment of the disclosure takes, as an example, a VHR SAR image of a place A after a natural disaster as shown in Fig. 2, after extraction of main roads in Fig. 2, a main road network shown by white lines in Fig. 3 is obtained; then the place A shown in Fig. 2 can be divided into 23 sub-image regions according to the main road network shown by white lines in Fig. 3, and numbers in Fig. 3 indicate specific sub-image regions. The method for acquiring road features in an SAR image is a commonly-used technical means known by those skilled in the art, and the detailed description thereof will be omitted.

It should be further noted that image texture is an inherent feature of an image, and it can refer to small-sized, semi-periodic or regularly-arranged patterns existed in a certain range of the image. The texture can be represented as a local sequentiality that is repeatable within a larger region, thus it is required to determine an observation scale, i.e., the size of a selected area to be observed, of the texture.

Thus, in a certain range of a geographic area, lands with different usages (e.g., factory zone and residential zone) are distinguished from one another by apparent roads, thus texture features of each sub-image region before a disaster are stable.

S102, a Gray Level Co-occurrence Matrix (GLCM) corresponding to an $ith$ sub-image region is acquired, and at least one texture feature value of the $ith$ sub-image region is acquired according to the GLCM;

Illustratively, i represents a number of a sub-image region, and i may be a positive integer not exceeding N that is the total number of sub-image regions.

illustratively, the GLCM is a commonly-used technical means that describes texture of an image using a probability of repeated occurrence of a gray scaled structure in the image.

Specifically, the GLCM P corresponding to the ith sub-image region may be acquired through formula 1:

$$p_i(x, y) = N / M \quad (1)$$

where $p_i(xi, y)$ is an element in row x and column $y$ of the GLCM P corresponding to the ith sub-image region and represents a probability of gray levels of two adjacent pixels in the ith sub-image region being $x$ and $y$ sequentially, $N$ is an occurrence number of gray levels of two adjacent pixels in the ith sub-image region being x and $y$ sequentially, and M is the total number of pixels in the ith sub-image region.

It can be seen from formula 1 that the GLCM P is a square matrix, the number of rows/columns of the square matrix is the number of gray scale values in the ith sub-image region.

Illustratively, after acquisition of the GLCM corresponding to the ith sub-image region, at least one texture feature value of the ith sub-image region can be acquired according to the GLCM, it should be noted that 14 texture features of the image can be acquired according to the GLCM, but among the 14 texture features, contrast, homogeneity and entropy are preferably three uncorrelated texture features having the best resolution and easiest to calculate.

Preferably, in an embodiment of the disclosure, the step that at least one texture feature value of the ith sub-image region is acquired according to the GLCM may include: the contrast, homogeneity and entropy of the ith sub-image region are acquired according to the GLCM.

Optically, in an embodiment of the disclosure, the contrast *CON* of the ith sub-image region is acquired according to the GLCM *P* and through formula 2:

$$CON = \sum_{x=1}^{NP} \sum_{y=1}^{NP} p(x, y) \cdot (x - y)^2 \quad (2)$$

where x is a row number of the GLCM P; *y* is a column number of the GLCM P, NP is the number of rows or columns of the GLCM *P*, and *p(x, y)* is an element in row *x* and column *y* of the GLCM *P*.

Optically, in an embodiment of the disclosure, the homogeneity *IDM* of the ith sub-image region is acquired according to the GLCM *P* and through formula 3:

$$IDM = \sum_{x=1}^{NP} \sum_{y=1}^{NP} p(x, y) \cdot \frac{1}{1 + (x - y)^2} \quad (3)$$

where x is a row number of the GLCM P; *y* is a column number of the GLCM *P*, NP is the number of rows or columns of the GLCM *P*, and *p(x, y)* is an element in row *x* and column *y* of the GLCM *P*.

Optically, in an embodiment of the disclosure, the entropy *ENT of* the ith sub-image region is acquired according to the GLCM *P* and through formula 4:

$$ENT = -\sum_{x=1}^{NP} \sum_{y=1}^{NP} p(x, y) \cdot \ln p(x, y) \quad (4)$$

where *x* is a row number of the GLCM *P, y* is a column number of the GLCM *P*, NP is the number of rows or columns of the GLCM *P, p(x, y)* is an element in row x and column *y* of the GLCM *P*, and ln *p(x, y)* represents calculation of the natural logarithm of *p(x, y)*.

It can be appreciated that after a natural disaster, sub-areas corresponding to respective sub-image regions may have different levels of damage, thus stability of texture features of the original sub-image regions is damaged, the three texture feature values selected in the embodiment of the disclosure can characterize damage to texture features of original sub-image regions by the natural disaster from three aspects, thus damage to different sub-areas of the disaster area can be characterized from three aspects; and the three feature values are uncorrelated, thus the three aspects are also uncorrelated, and content of damage in the disaster area that is characterized from the three aspects will be more abundant.

S103, texture feature value levels corresponding to respective texture feature values of the ith sub-image region are determined according to a preset ranking strategy.

Illustratively, each texture feature value may correspond to a ranking strategy, thus it is possible to acquire a texture feature value level corresponding to each texture feature value. The texture feature value level corresponding to each texture feature value can be used to characterize a damage level of an ith sub-image region that is reflected by the texture feature value.

Specifically, in the embodiment of the disclosure, by comparison of the contrast CON of the ith sub-image region with two preset thresholds, it is possible to determine a damage level of the ith sub-image region that is reflected by the contrast CON, i.e., a texture feature value level corresponding to the contrast CON of the ith sub-image region; accordingly, a texture feature value level corresponding to the homogeneity IDM of the ith sub-image region and a texture feature value level corresponding to the entropy ENT of the ith sub-image region can be respectively determined according to the same way by which the the texture feature value corresponding to the contrast CON of the ith sub-image region is determined above, based on the homogeneity IDM of the ith sub-image region and the entropy ENT of the ith sub-image region.

It can be appreciated that texture feature value levels corresponding to respective texture feature values of respective sub-image regions can be obtained according to steps S102 and S103, in a specific embodiment, the texture feature value levels corresponding to each texture feature value can includes three levels, i.e., severe, moderate and mild each can be characterized by a corresponding digit, for example, in the embodiment, a severe damage corresponds to a digit 3, a moderate damage corresponds to a digit 2 and a mild damage corresponds to a digit 1.

In the embodiment, in order to describe the effect of the disclosure, referring to table 1, it shows practical damage levels of respective post-event sub-areas shown in Fig. 3.

Table 1

| Practical damage level | Quantity of sub regions | Number of sub regions |
|---|---|---|
| Mildly damaged | 10 | 5, 6, 8, 10, 11, 14, 20, 21, 22, 23 |
| Moderately damaged | 8 | 1, 3, 4, 9, 15, 16, 17, 19 |
| Severely damaged | 5 | 2, 7, 12, 13, 18 |

It can be seen from Table 1 that among respective post-event sub-areas shown in Fig. 3, there are 10 mildly-damaged areas with their numbers being 5, 6, 8, 10, 11, 14, 20, 21, 22, 23; there are 8 moderately-damaged areas with their numbers being 1, 3, 4, 9, 15, 16, 17, 19; and there are 5 severely-damaged areas with their numbers being 2, 7, 12, 13, 18.

It can be seen from step S103 that texture feature value levels corresponding to contrast of respective sub-image regions shown in Fig. 3 is as shown in Table 2.

Table 2

| Contrast level | Quantity of sub regions | Number of sub regions |
|---|---|---|
| Mildly damaged | 6 | 5, 10, 11, 21, 22, 23 |
| Moderately damaged | 10 | 1, 4, 6, 8, 9, 12, 13, 16, 17, 20 |
| Severely damaged | 7 | 2, 3, 7, 14, 15, 18, 19 |

It can be seen from comparison of Table 1 with Table 2, among practical mildly-damaged sub-areas, there are 3 sub-areas whose texture feature value levels corresponding to the contrast are increased to moderately damaged, and there is one sub-area whose texture feature value level corresponding to the contrast is increased to severely damaged; among practical moderately-damaged sub-areas, there are 3 sub-areas whose texture feature value levels corresponding to the contrast are increased to severely damaged; and among practical severely-damaged sub-areas, there are 2 sub-areas whose texture feature value levels corresponding to the contrast are reduced to moderately damaged; it can be concluded that for texture feature value levels corresponding to the contrast, a ratio for level reduction is about $\frac{2}{23} \times 100\% = 8.7\%$.

Texture feature value levels corresponding to homogeneity of respective sub-image regions shown in Fig. 3 is as shown in Table 3.

Table 3

| Homogeneity level | Quantity of sub regions | Number of sub regions |
|---|---|---|
| Mildly damaged | 7 | 4, 5, 10, 11, 21, 22, 23 |
| Moderately damaged | 10 | 1, 6, 8, 9, 12, 13, 14, 17, 19, 20 |
| Severely damaged | 6 | 2, 3, 7, 15, 16, 18 |

It can be seen from comparison of Table 1 with Table 3, among practical mildly-damaged sub-areas, there are 4 sub-areas whose texture feature value levels corresponding to the homogeneity are increased to moderately damaged; among practical moderately-damaged sub-areas, there are 3 sub-areas whose texture feature value levels corresponding to the homogeneity are increased to severely damaged, and there is one sub-area whose texture feature value levels corresponding to the homogeneity is reduced to mildly damaged; and among practical severely-damaged sub-areas, there are 2 sub-areas whose texture feature value levels corresponding to the homogeneity are reduced to moderately damaged; it can be concluded that for texture feature value levels corresponding to the homogeneity, a ratio for level reduction is about $\frac{3}{23} \times 100\% = 13\%$.

Texture feature value levels corresponding to entropy of respective sub-image regions shown in Fig. 3 is as shown in Table 4.

Table 4

| Entropy level | Quantity of sub regions | Number of sub regions |
|---|---|---|
| Mildly damaged | 6 | 5, 10, 19, 21, 22, 23 |
| Moderately damaged | 10 | 4, 6, 8, 9, 11, 12, 13, 14, 17, 20 |
| Severely damaged | 7 | 1, 2, 3, 7, 15, 16, 18 |

It can be seen from comparison of Table 1 with Table 4, among practical mildly-damaged sub-areas, there are 5 sub-areas whose texture feature value levels corresponding to the entropy are increased to moderately damaged; among practical moderately-damaged sub-areas, there are 4 sub-areas whose texture feature value levels corresponding to the entropy are increased to severely damaged, and there is one sub-area whose texture feature value levels corresponding to the entropy is reduced to mildly damaged; and among practical severely-damaged sub-areas, there are 2 sub-areas whose texture feature value levels corresponding to the entropy are reduced to moderately damaged; it can be concluded that for texture feature value levels corresponding to the entropy, a ratio for level reduction is about

$$\frac{3}{23} \times 100\% = 13\%.$$

S104, a damage level of the ith sub-image region is acquired according to the texture feature value levels corresponding to respective texture feature values of the ith sub-image region and preset weights of respective texture feature values.

It should be noted that levels of damage to texture features of original sub-image regions by a natural disaster can be characterized from respective aspects according to respective texture feature values from step S102, thus it can be appreciated that in the embodiment of the disclosure, the texture feature value levels corresponding to respective texture feature values of the ith sub-image region are weighted by corresponding preset weights and then summed so that the damage level of the ith sub-image area can be obtained by merging damage levels corresponding to respective texture feature values.

Preferably, three un-correlated texture feature values, i.e., contrast, homogeneity and entropy are selected in the embodiment, thus the weight of each texture feature value can be the same, i.e., 1/3, digits acquired from S103 for characterizing texture feature value levels corresponding to respective texture feature values are weighted by their respective weights and then summed so that the damage level of the ith sub-image region can be obtained and thus the damage level of the disaster area can be known.

Referring to Fig. 5, it shows final damage levels of respective sub-image regions shown in Fig. 3.

Table 5

| Damage levels | Quantity of sub regions | Number of sub regions |
|---|---|---|
| Mildly damaged | 6 | 5, 10, 11, 21, 22, 23 |
| Moderately damaged | 11 | 1, 4, 6, 8, 9, 12, 13, 14, 16, 17, 20 |
| Severely damaged | 6 | 2, 3, 7, 15, 18, 19 |

It can be seen from comparison of Table 1 with Table 5, among practical mildly-damaged sub-areas, there are 5 sub-areas whose damage levels are increased to moderately damaged; among practical moderately-damaged sub-areas, there are 4 sub-areas whose damage levels are increased to severely damaged, and there is one sub-area whose damage level is reduced to mildly damaged; and among practical severely-damaged sub-areas, there are 2 sub-areas whose damage levels are reduced to moderately damaged; it can be concluded that for damage levels of respective sub-areas, a ratio for level reduction is about $\frac{3}{23} \times 100\% = 13\%$.

The embodiment of the disclosure provides a method for assessing damage in a disaster area, damage in the disaster area is assessed using a change in image texture features caused by post-event damage in the disaster area, thus the method and device can assess damage in the disaster area through a single post-event VHR SAR image of the disaster area.

Based on the same technical ideas described in the embodiment above, referring to Fig. 4, it shows structure of a device 40 for assessing damage in a disaster area according to an embodiment of the disclosure, and the device 40 includes a division unit 401, a first acquisition unit 402, a second acquisition unit 403, a determination unit 404 and a third acquisition unit 405, wherein

the division unit 401 is configured to divide a captured post-event Very High Resolution (VHR) Synthetic Aperture Radar (SAR) image of the disaster area into at least one sub-image region;

the first acquisition unit 402 is configured to acquire a Gray Level Co-occurrence Matrix (GLCM) corresponding to an ith sub-image region;

the second acquisition unit 403 is configured to acquire at least one texture feature value of the ith sub-image region according to the GLCM;

the determination unit 404 is configured to determine, according to a preset ranking strategy, texture feature value levels corresponding to respective texture feature values of the ith sub-image region; and

the third acquisition unit 405 is configured o acquire a damage level of the ith sub-image region according to the texture feature value levels corresponding to respective texture feature values of the ith sub-image region and preset weights of respective texture feature values.

Illustratively, the division unit 401 is configured to:

extract a main road network in the VHR SAR image according to road features of the VHR SAR image; and
divide the VHR SAR image into at least one sub-image region according to the main road network in the VHR SAR image.

Illustratively, the first acquisition unit 402 is configured to acquire a GLCM $P$ corresponding to an ith sub-image region;

$$p_i(x, y) = N / M$$

where $p_i(x_i, y)$ is an element in row $x$ and column $y$ of the GLCM P corresponding to the ith sub-image region and represents a probability of gray levels of two adjacent pixels in the ith sub-image region being $x$ and $y$ sequentially, $N$ is an occurrence number of gray levels of two adjacent pixels in the ith sub-image region being $x$ and $y$ sequentially, and $M$ is the total number of pixels in the ith sub-image region;

wherein the at least one texture feature value of the ith sub-image region comprises the contrast, homogeneity and entropy of the ith sub-image region.

Further, the second acquisition unit 403 is configured to:

acquire the contrast *CON of* the ith sub-image region according to the GLCM *P* and through:

$$CON = \sum_{x=1}^{NP} \sum_{y=1}^{NP} p(x, y) \cdot (x - y)^2$$

where x is a row number of the GLCM P; $y$ is a column number of the GLCM *P,* NP is the number of rows or columns of the GLCM *P,* and $p(x, y)$ is an element in row $x$ and column $y$ of the GLCM *P;*
and acquire the homogeneity *IDM* of the ith sub-image region according to the GLCM *P* and through:

$$IDM = \sum_{x=1}^{NP} \sum_{y=1}^{NP} p(x, y) \cdot \frac{1}{1 + (x - y)^2}$$

where x is a row number of the GLCM P; $y$ is a column number of the GLCM *P,* NP is the number of rows or columns of the GLCM *P,* and $p(x, y)$ is an element in row $x$ and column $y$ of the GLCM *P;*
and acquire the entropy *ENT of* the ith sub-image region according to the GLCM *P* and through:

$$ENT = -\sum_{x=1}^{NP} \sum_{y=1}^{NP} p(x, y) \cdot \ln p(x, y)$$

where x is a row number of the GLCM *P, y* is a column number of the GLCM P, NP is the number of rows or columns of the GLCM *P, p(x, y)* is an element in row *x* and column *y of* the GLCM *P,* and In *p(x, y)* represents calculation of the natural logarithm of *p(x, y).*

Illustratively, the third acquisition unit 405 is configured to weight the texture feature value levels corresponding to respective texture feature values of the ith sub-image region by corresponding preset weights and sum weighted texture feature value levels to acquire the damage level of the ith sub-image region.

The embodiment of the disclosure provides a device 40 for assessing damage in a disaster area, damage in the disaster area is assessed using a change in image texture features caused by post-event damage in the disaster area, thus the method and device can assess damage in the disaster area through a single post-event VHR SAR image of the disaster area.

It should be appreciated by those skilled in the art that embodiments of the disclosure can be provided as a method, system or computer program product. Therefore, the disclosure can be in the form of a hardware embodiment, a software embodiment or a embodiment combining both hardware and software. In addition, the disclosure can be in the form of a computer program product implemented on one or more computer usable storage media (including but not limiting to a magnetic disk storage and an optical storage) containing computer usable program codes.

The disclosure is described with reference to flow charts and/or block diagrams of the method, device (system) and computer program product according to embodiments of the disclosure. It should be appreciated that computer program instructions can be used to implement each process and/or block in flow charts and/or block diagrams and to implement the combination of processes and/or blocks in the flow charts and/or the block diagrams. Such computer program instructions can be provided to a processor of a general-purpose computer, a special-purpose computer, an embedded processor or other programmable data processing device so as to form a machine so that an instruction implemented by the processor of the computer or other programmable data processing device generates a device for implementing a function specified in one or more processes of a flow chart and/or one or more blocks of a block diagram.

Such computer program instructions can also be stored in a computer readable storage capable of directing a computer or other programmable data processing devices to operate in a specific way so that an instruction stored in the computer readable storage generates an artifact including an instructing device which can implement a function specified in one or more processes of a flow chart and/or one or more blocks of a block diagram.

Such computer program instructions can also be loaded onto a computer or other programmable data processing device so that a series of operation steps are implemented on the computer or other programmable data processing device to generate a computer-implemented processing and therefore an instruction implemented on the computer or other programmable devices provides a step for implementing a function specified in one or more processes of a flow chart and/or one or more blocks of a block diagram.

**Claims**

1. A method for assessing damage in a disaster area, the method comprising:

    dividing a captured post-event Very High Resolution (VHR) Synthetic Aperture Radar (SAR) image of the disaster area into at least one sub-image region;
    acquiring a Gray Level Co-occurrence Matrix (GLCM) corresponding to an *ith* sub-image region, and acquiring at least one texture feature value of the *ith* sub-image region according to the GLCM;
    determining, according to a preset ranking strategy, texture feature value levels corresponding to respective texture feature values of the *ith* sub-image region, wherein the preset ranking strategy refers to a comparison of respective texture feature values of the *ith* sub-image region with two preset thresholds in the contrast CON of the sub-image region, and
    acquiring a damage level of the *ith* sub-image region according to the texture feature value levels corresponding to respective texture feature values of the *ith* sub-image region and preset weights of respective texture feature values,
    wherein the GLCM *P* corresponding to the *ith* sub-image region is acquired through:

$$p_i(x, y) = N / M$$

    where $p_i(x, y)$ is an element in row x and column *y* of the GLCM *P* corresponding to the *ith* sub-image region and represents a probability of gray levels of two adjacent pixels in the *ith* sub-image region being *x* and *y* sequentially, *N* is an occurrence number of gray levels of two adjacent pixels in the *ith* sub-image region being *x* and *y* sequentially, and *M* is the total number of pixels in the *ith* sub-image region;

wherein the at least one texture feature value of the *ith* sub-image region comprises the contrast, homogeneity and entropy of the *ith* sub-image region,

wherein the step of acquiring at least one texture feature value of the *ith* sub-image region according to the GLCM comprises:

acquiring the contrast *CON* of the *ith* sub-image region according to the GLCM *P* and through:

$$CON = \sum_{x=1}^{NP} \sum_{y=1}^{NP} p(x, y) \cdot (x - y)^2$$

where x is a row number of the GLCM *P; y* is a column number of the GLCM *P,* NP is the number of rows or columns of the GLCM *P,* and *p(x, y)* is an element in row *x* and column *y* of the GLCM *P;*

acquiring the homogeneity *IDM* of the ith sub-image region according to the GLCM *P* and through:

$$IDM = \sum_{x=1}^{NP} \sum_{y=1}^{NP} p(x, y) \cdot \frac{1}{1 + (x - y)^2}$$

where *x* is a row number of the GLCM P; *y* is a column number of the GLCM *P,* NP is the number of rows or columns of the GLCM *P,* and *p(x, y)* is an element in row *x* and column *y* of the GLCM *P;*

acquiring the entropy *ENT* of the ith sub-image region according to the GLCM *P* and through:

$$ENT = -\sum_{x=1}^{NP} \sum_{y=1}^{NP} p(x, y) \cdot \ln p(x, y)$$

where x is a row number of the GLCM *P,* y is a column number of the GLCM P, NP is the number of rows or columns of the GLCM *P, p(x, y)* is an element in row *x* and column *y* of the GLCM *P,* and ln *p(x, y)* represents calculation of the natural logarithm of *p(x, y).*

2. The method according to claim 1, wherein the step of dividing a captured post-event VHR SAR image of the disaster area into at least one sub-image region comprises:

   extracting a main road network in the VHR SAR image according to road features of the VHR SAR image; and dividing the VHR SAR image into at least one sub-image region according to the main road network in the VHR SAR image.

3. The method according to claim 1, wherein the acquiring a damage level of the ith sub-image region according to the texture feature value levels corresponding to respective texture feature values of the ith sub-image region and preset weights of respective texture feature values comprises:

   weighting the texture feature value levels corresponding to respective texture feature values of the ith sub-image region by corresponding preset weights and summing weighted texture feature value levels to acquire the damage level of the ith sub-image region.

4. A device for assessing damage in a disaster area, the device comprising a division unit, a first acquisition unit, a second acquisition unit, a determination unit and a third acquisition unit, wherein the division unit is configured to divide a captured post-event Very High Resolution (VHR) Synthetic Aperture Radar (SAR) image of the disaster area into at least one sub-image region;
   the first acquisition unit is configured to acquire a Gray Level Co-occurrence Matrix (GLCM) corresponding to an *ith* sub-image region;
   the second acquisition unit is configured to acquire at least one texture feature value of the *ith* sub-image region according to the GLCM;

the determination unit is configured to determine, according to a preset ranking strategy, texture feature value levels corresponding to respective texture feature values of the ith sub-image region, wherein the preset ranking strategy refers to a comparison of respective texture feature values of the *ith* sub-image region with two preset thresholds in the contrast CON of the sub-image region and the third acquisition unit is configured o acquire a damage level of the ith sub-image region according to the texture feature value levels corresponding to respective texture feature values of the ith sub-image region and preset weights of respective texture feature values,

wherein the first acquisition unit is configured to acquire the GLCM P corresponding to the ith sub-image region through:

$$p_i(x, y) = N / M$$

where $p_i(x, y)$ is an element in row x and column *y* of the GLCM P corresponding to the ith sub-image region and represents a probability of gray levels of two adjacent pixels in the ith sub-image region being *x* and *y* sequentially, *N* is an occurrence number of gray levels of two adjacent pixels in the ith sub-image region being x and *y* sequentially, and M is the total number of pixels in the ith sub-image region;

wherein the at least one texture feature value of the ith sub-image region comprises the contrast, homogeneity and entropy of the ith sub-image region,

wherein the second acquisition unit is configured to:

acquire the contrast *CON of* the ith sub-image region according to the GLCM P and through:

$$CON = \sum_{x=1}^{NP} \sum_{y=1}^{NP} p(x, y) \cdot (x - y)^2$$

where x is a row number of the GLCM P; *y* is a column number of the GLCM P, NP is the number of rows or columns of the GLCM P, and *p(x, y)* is an element in row *x* and column *y* of the GLCM *P;*

and acquire the homogeneity *IDM* of the ith sub-image region according to the GLCM P and through:

$$IDM = \sum_{x=1}^{NP} \sum_{y=1}^{NP} p(x, y) \cdot \frac{1}{1 + (x - y)^2}$$

where *x* is a row number of the GLCM P; *y* is a column number of the GLCM *P,* NP is the number of rows or columns of the GLCM *P,* and *p(x, y)* is an element in row *x* and column *y* of the GLCM *P;*

and acquire the entropy *ENT of* the ith sub-image region according to the GLCM *P* and through:

$$ENT = -\sum_{x=1}^{NP} \sum_{y=1}^{NP} p(x, y) \cdot \ln p(x, y)$$

where x is a row number of the GLCM *P, y* is a column number of the GLCM P, NP is the number of rows or columns of the GLCM *P, p(x, y)* is an element in row *x* and column *y* of the GLCM *P*, and In *p(x, y)* represents calculation of the natural logarithm of *p(x, y)*.

5. The device according to claim 6, wherein the division unit is configured to:

extract a main road network in the VHR SAR image according to road features of the VHR SAR image; and divide the VHR SAR image into at least one sub-image region according to the main road network in the VHR SAR image.

6. The device according to claim 6, wherein the third acquisition unit is configured to weight the texture feature value levels corresponding to respective texture feature values of the ith sub-image region by corresponding preset weights and sum weighted texture feature value levels to acquire the damage level of the ith sub-image region.

**Patentansprüche**

1. Verfahren zum Bewerten von Schäden in einem Katastrophengebiet, wobei das Verfahren Folgendes umfasst:

Aufteilen eines nach dem Ereignis aufgenommenen Bildes sehr hoher Auflösung (Very High Resolution, VHR) durch Radar mit synthetischer Blende (Synthetic Aperture Radar, SAR) eines Katastrophengebietes in mindestens eine Teilbildregion;

Erfassen einer Grauwertematrix (Gray Level Co-occurrence Matrix, GLCM), die einer *iten* Teilbildregion entspricht, und Erfassen mindestens eines Texturmerkmalwertes der *iten* Teilbildregion gemäß der GLCM;

Bestimmen, gemäß einer zuvor eingestellten Rangordnungsstrategie, von Texturmerkmalswertestufen, die jeweiligen Texturmerkmalswerten der *iten* Teilbildregion entsprechen, wobei sich die zuvor eingestellte Rangordnungsstrategie auf einen Vergleich von jeweiligen Texturmerkmalswerten der *iten* Teilbildregion mit zwei zuvor eingestellten Schwellenwerten in dem Kontrast CON der Teilbildregion bezieht, und

Erfassen einer Schadensstufe der iten Teilbildregion gemäß den Texturmerkmalswertestufen, die den jeweiligen Texturmerkmalswerten der *iten* Teilbildregion und zuvor eingestellten Gewichtungen von jeweiligen Texturmerkmalswerten entsprechen,

wobei die GLCM *P,* die der *iten* Teilbildregion entspricht, erfasst wird durch:

$$p_i(x, y) = N \mid M$$

wobei es sich bei $p_i(x, y)$ um ein Element in Reihe *x* und Spalte *y* der GLCM *P* handelt, die der *iten* Teilbildregion entspricht, und eine Wahrscheinlichkeit von Graustufen von zwei benachbarten Pixeln in der iten Teilbildregion repräsentiert, bei denen es sich um *x* und *y* aufeinanderfolgend handelt, es sich bei *N* um eine Häufigkeit der Anzahl an Graustufen von zwei benachbarten Pixeln in der *iten* Teilbildregion handelt, bei denen es sich um *x* und *y* aufeinanderfolgend handelt, und es sich bei *M* um die gesamte Anzahl an Pixeln in der *iten* Teilbildregion handelt;

wobei der mindestens eine Texturmerkmalswert der *iten* Teilbildregion den Kontrast, die Homogenität und die Entropie der *iten* Teilbildregion umfasst,

wobei der Schritt des Erfassens von mindestens einem Texturmerkmalswert der *iten* Teilbildregion gemäß der GLCM Folgendes umfasst:

Erfassen des Kontrastes *CON* der iten Teilbildregion gemäß der GLCM *P* und durch:

$$CON = \sum_{x=1}^{NP} \sum_{y=1}^{NP} p(x, y) \cdot (x - y)^2$$

wobei es sich bei *x* um einen Reihenzahl der GLCM *P* handelt; es sich bei *y* um eine Spaltenzahl der GLCM *P* handelt, es sich bei NP um die Anzahl an Reihen oder Spalten der GLCM *P* handelt, und es sich bei *p(x, y)* um ein Element in Reihe *x* und Spalte *y* der GLCM *P* handelt;

Erfassen der Homogenität *IDM* der *iten* Teilbildregion gemäß der GLCM *P* und durch:

$$IDM = \sum_{x=1}^{NP} \sum_{y=1}^{NP} p(x, y) \cdot \frac{1}{1 + (x - y)^2}$$

wobei es sich bei *x* um einen Reihenzahl der GLCM *P* handelt, es sich bei *y* um eine Spaltenzahl der GLCM *P* handelt, es sich bei NP um die Anzahl an Reihen oder Spalten der GLCM P handelt, und es sich bei *p(x, y)* um ein Element in Reihe *x* und Spalte *y* der GLCM *P* handelt;

Erfassen der Entropie *ENT* der *iten* Teilbildregion gemäß der GLCM *P* und durch:

$$ENT = -\sum_{x=1}^{NP}\sum_{y=1}^{NP} p(x, y)\cdot \ln p(x, y)$$

wobei es sich bei $x$ um eine Reihenzahl der GLCM $P$ handelt, es sich bei $y$ um eine Spaltenzahl der GLCM $P$ handelt, es sich bei $NP$ um die Anzahl an Reihen oder Spalten der GLCM $P$ handelt, und es sich bei $p(x, y)$ um ein Element in Reihe $x$ und Spalte $y$ der GLCM $P$ handelt, und $ln\ p(x, y)$ die Berechnung des natürlichen Logarithmus von $p(x,y)$ repräsentiert.

2. Verfahren nach Anspruch 1, wobei der Schritt des Aufteilens eines nach dem Ereignis aufgenommenen VHR-SAR-Bildes des Katastrophengebietes in mindestens eine Teilbildregion Folgendes umfasst:

Extrahieren eines Hauptstraßennetzwerkes in dem VHR-SAR-Bild gemäß den Straßenmerkmalen des VHR-SAR-Bildes; und
Aufteilen des VHR-SAR-Bildes in mindestens eine Teilbildregion gemäß dem Hauptstraßennetzwerk in dem VHR-SAR-Bild.

3. Verfahren nach Anspruch 1, wobei das Erfassen einer Schadensstufe der *iten* Teilbildregion gemäß den Texturmerkmalswertestufen, die den jeweiligen Texturmerkmalswerten der *iten* Teilbildregion und zuvor eingestellten Gewichtungen von jeweiligen Texturmerkmalswerten entsprechen, Folgendes umfasst:

Gewichten der Texturmerkmalswertestufen, die jeweiligen Texturmerkmalswerten der *iten* Teilbildregion entsprechen, durch entsprechende zuvor eingestellte Gewichtungen und Addieren gewichteter Texturmerkmalswertestufen, um die Schadensstufe der *iten* Teilbildregion zu erfassen.

4. Vorrichtung zum Bewerten von Schäden in einem Katastrophengebiet, wobei die Vorrichtung eine Aufteilungseinheit, eine erste Erfassungseinheit, eine zweite Erfassungseinheit, eine Bestimmungseinheit und eine dritte Erfassungseinheit umfasst, wobei
die Aufteilungseinheit dazu ausgestaltet ist, ein nach dem Ereignis aufgenommenes Bild sehr hoher Auflösung (VHR) durch Radar mit synthetischer Blende (SAR) des Katastrophengebietes in mindestens eine Teilbildregion aufzuteilen;
die erste Erfassungseinheit dazu ausgestaltet ist, eine Grauwertematrix (GLCM), die einer *iten* Teilbildregion entspricht, zu erfassen;
die zweite Erfassungseinheit dazu ausgestaltet ist, mindestens einen Texturmerkmalswert der *iten* Teilbildregion gemäß der GLCM zu erfassen;
die Bestimmungseinheit dazu ausgestaltet ist, gemäß einer zuvor eingestellten Rangordnungsstrategie, Texturmerkmalswertestufen, die jeweiligen Texturmerkmalswerten der *iten* Teilbildregion entsprechen, zu bestimmen, wobei sich die zuvor eingestellte Rangordnungsstrategie auf einen Vergleich von jeweiligen Texturmerkmalswerten der *iten* Teilbildregion mit zwei zuvor eingestellten Schwellenwerten in dem Kontrast $CON$ der Teilbildregion bezieht, und
die dritte Erfassungseinheit dazu ausgestaltet ist, eine Schadensstufe der *iten* Teilbildregion gemäß den Texturmerkmalswertestufen, die jeweiligen Texturmerkmalswerten der *iten* Teilbildregion und zuvor eingestellten Gewichtungen von jeweiligen Texturmerkmalswerten entsprechen, zu erfassen,
wobei erste Erfassungseinheit dazu ausgestaltet ist, die GLCM $P$, die der *iten* Teilbildregion entspricht, zu erfassen durch:

$$p_i(x, y) = N \mid M$$

wobei es sich bei $p_i(x, y)$ um ein Element in Reihe $x$ und Spalte $y$ der GLCM $P$ handelt, die der *iten* Teilbildregion entspricht, und eine Wahrscheinlichkeit von Graustufen von zwei benachbarten Pixeln in der *iten* Teilbildregion repräsentiert, bei denen es sich um x und $y$ aufeinanderfolgend handelt, es sich bei $N$ um eine Häufigkeit der Anzahl an Graustufen von zwei benachbarten Pixeln in der *iten* Teilbildregion handelt, bei denen es sich um $x$ und $y$ aufeinanderfolgend handelt, und es sich bei $M$ um die gesamte Anzahl an Pixeln in der *iten* Teilbildregion handelt;
wobei der mindestens eine Texturmerkmalswert der *iten* Teilbildregion den Kontrast, die Homogenität und die Entropie der *iten* Teilbildregion umfasst,

wobei die zweite Erfassungseinheit dazu ausgestaltet ist:
den Kontrast *CON* der iten Teilbildregion gemäß der GLCM P zu erfassen, und durch:

$$CON = \sum_{x=1}^{NP} \sum_{y=1}^{NP} p(x, y) \cdot (x - y)^2$$

wobei es sich bei *x* um einen Reihenzahl der GLCM *P* handelt; es sich bei *y* um eine Spaltenzahl der GLCM *P* handelt, es sich bei *NP* um die Anzahl an Reihen oder Spalten der GLCM P handelt, und es sich bei *p(x, y)* um ein Element in Reihe *x* und Spalte *y* der GLCM *P* handelt;
und um die Homogenität *IDM* der iten Teilbildregion gemäß der GLCM P erfassen, und durch:

$$IDM = \sum_{x=1}^{NP} \sum_{y=1}^{NP} p(x, y) \cdot \frac{1}{1 + (x - y)^2}$$

wobei es sich bei *x* um einen Reihenzahl der GLCM *P* handelt; es sich bei *y* um eine Spaltenzahl der GLCM *P* handelt, es sich bei *NP* um die Anzahl an Reihen oder Spalten der GLCM P handelt, und es sich bei *p(x, y)* um ein Element in Reihe *x* und Spalte *y* der GLCM *P* handelt;
und um die Entropie *ENT* der *iten* Teilbildregion gemäß der GLCM *P* zu erfassen, und durch:

$$ENT = -\sum_{x=1}^{NP} \sum_{y=1}^{NP} p(x, y) \cdot \ln p(x, y)$$

wobei es sich bei *x* um einen Reihenzahl der GLCM *P* handelt, es sich bei *y* um eine Spaltenzahl der GLCM *P* handelt, es sich bei *NP* um die Anzahl an Reihen oder Spalten der GLCM P handelt, und *ln p(x, y)* die Berechnung des natürlichen Logarithmus von *p(x,y)* repräsentiert.

5.  Vorrichtung nach Anspruch 6, wobei die Aufteilungseinheit dazu ausgestaltet ist:

    ein Hauptstraßennetzwerk in dem VHR-SAR-Bild gemäß den Straßenmerkmalen des VHR-SAR-Bildes zu extrahieren; und
    das VHR-SAR-Bild in mindestens eine Teilbildregion gemäß dem Hauptstraßennetzwerk in dem VHR-SAR-Bild aufzuteilen.

6.  Vorrichtung nach Anspruch 6, wobei die dritte Erfassungseinheit dazu ausgestaltet ist, die Texturmerkmalswertestufen, die jeweiligen Texturmerkmalswerten der *iten* Teilbildregion entsprechen, durch entsprechende zuvor eingestellte Gewichtungen und die Summe gewichteter Texturmerkmalswertestufen zu gewichten, um die Schadensstufe der *iten* Teilbildregion zu erfassen.

## Revendications

1.  Procédé pour évaluer des dommages dans une zone sinistrée, le procédé comprenant de :

    diviser une image de radar à synthèse d'ouverture (SAR) à très haute résolution (VHR) capturée post-évènement de la zone sinistrée en au moins une région de sous-image ;
    acquérir une matrice de co-occurrence de niveau de gris (GLCM) correspondant à une i-ème région de sous-image et acquérir au moins une valeur de caractéristique de texture de la i-ème région de sous-image selon la GLCM ;
    déterminer, selon une stratégie de hiérarchie préréglée, des niveaux de valeur de caractéristique de texture correspondant à des valeurs de caractéristique de texture respective de la i-ème région de sous-image, dans lequel la stratégie de hiérarchie préréglée se rapporte à une comparaison des valeurs de caractéristique de texture respectives de la i-ème région de sous-image avec deux seuils préréglés de contraste CON de la région de sous-image, et
acquérir un niveau du dommage de la i-ème région de sous-image selon les niveaux de valeur de caractéristique de texture correspondant aux valeurs de caractéristique de texture respectives de la i-ème région de sous-image et des pondérations préréglées des valeurs de caractéristique de texture respectives,
dans lequel le GLCM P correspondant à la i-ème région de sous-image est acquise par :

$$p_i(x, y) = N \mid M$$

où $p_i(x, y)$ est un élément dans une rangée x et une colonne y de la GLCM P correspondant à la i-ème région de sous-image et représente une probabilité des niveaux de gris de deux pixels adjacents dans la i-ème région de sous-image x et y séquentiellement, N est un nombre d'occurrence des niveaux de gris de deux pixels adjacents dans la i-ème région de sous-image étant x et y séquentiellement, et M est le nombre total de pixels dans la i-ème région de sous-image ;
dans lequel au moins une valeur de fonctionnalité de texture de la i-ème région de sous-image comprend le contraste, l'homogénéité et l'entropie de la i-ème région de sous-image,
dans lequel l'étape d'acquisition d'au moins une valeur de caractéristique de texture de la i-ème région de sous-image selon la GLCM comprend de :

acquérir le contraste CON de la i-ème région de sous-image selon la GLCM P et par :

$$CON = \sum_{x=1}^{NP} \sum_{y=1}^{NP} p(x, y) \cdot (x - y)^2$$

où x est un nombre de rangée de la GLCM P, y est un nombre de colonne de la GLCM P, NP est le nombre de rangées ou colonnes de la GLCM P et est un élément dans la rangée x et la colonne y de la GLCM P ;
$p(x, y)$ acquérir l'homogénéité IDM de la région de sous-image selon la GLCM P et par :

$$IDM = \sum_{x=1}^{NP} \sum_{y=1}^{NP} p(x, y) \cdot \frac{1}{1 + (x - y)^2}$$

où x est un nombre de rangée de la GLCM P, y est un nombre de colonne de la GLCM P, NP est le nombre de rangées ou colonnes de la GLCM P et $p(x, y)$ est un élément dans la rangée x et la colonne y de la GLCM P ;
acquérir l'entropie ENT de la région de sous-image selon la GLCM P et par :

$$ENT = -\sum_{x=1}^{NP} \sum_{y=1}^{NP} p(x, y) \cdot \ln p(x, y)$$

où x est un nombre de rangée de la GLCM P, y est un nombre de colonne de la GLCM P, NP est le nombre de rangées ou colonnes de la GLCM P et $p(x, y)$ représente me calcul du logarithme naturel de p(x,y).

2. Procédé selon la revendication 1, dans lequel l'étape de division d'une image SAR VHR capturée post-évènement de la zone sinistrée en au moins une région de sous-image comprend de :

extraire un réseau routier principal de l'image VHR SAR selon les caractéristiques de route de l'image SAR VHR ; et
diviser l'image SAR VHR en au moins une région de sous-image selon le réseau routier principal dans l'image SAR VHR.

3. Procédé selon la revendication 1, dans lequel l'acquisition d'un niveau de dommage de la i-ème région de sous-image selon les niveaux de valeur de caractéristique de texture correspondant aux valeurs de caractéristique de texture respectives de la i-ème région de sous-image et aux pondérations préréglées des valeurs de caractéristique de texture respectives comprend de :

pondérer les niveaux de valeur de caractéristique de texture correspondant aux valeurs de caractéristique de texture respectives de la i-ème région de sous-image par des pondérations préréglées correspondantes et additionner les niveaux de valeur de caractéristique de texture pondérés pour acquérir le niveau de dommage de la i-ème région de sous-image.

4. Dispositif pour évaluer des dommages dans une zone sinistrée, le dispositif comprenant une unité de division, une première unité d'acquisition, une seconde unité d'acquisition, une unité de détermination et une troisième unité d'acquisition, dans lequel

l'unité de division est configurée pour diviser une image de radar à synthèse d'ouverture (SAR) à très haute résolution (VHR) capturée post-évènement de la zone sinistrée en au moins une région de sous-image ;

la première unité d'acquisition est configurée pour acquérir une matrice de co-occurrence de niveau de gris (GLCM) correspondant à une i-ème région de sous-image ;

la seconde unité d'acquisition est configurée pour acquérir au moins une valeur de caractéristique de texture de la i-ème région de sous-image selon la GLCM ;

l'unité de détermination est configurée pour déterminer, selon une stratégie de hiérarchie préréglée, des niveaux de valeur de caractéristique de texture correspondant à des valeurs de caractéristique de texture respective de la i-ème région de sous-image, dans lequel la stratégie de hiérarchie préréglée se rapporte à une comparaison des valeurs de caractéristique de texture respectives de la i-ème région de sous-image avec deux seuils préréglés de contraste CON de la région de sous-image, et

la troisième unité d'acquisition est configurée pour acquérir un niveau du dommage de la i-ème région de sous-image selon les niveaux de valeur de caractéristique de texture correspondant aux valeurs de caractéristique de texture respectives de la i-ème région de sous-image et des pondérations préréglées des valeurs de caractéristique de texture respectives,

dans lequel la première unité d'acquisition est configurée pour acquérir la GLCM P correspondant à la i-ème sous-image par:

$$p_i(x, y) = N \mid M$$

où $p_i(x, y)$ est un élément dans une rangée x et une colonne y de la GLCM P correspondant à la i-ème région de sous-image et représente une probabilité des niveaux de gris de deux pixels adjacents dans la i-ème région de sous-image x et y séquentiellement, N est un nombre d'occurrence des niveaux de gris de deux pixels adjacents dans la i-ème région de sous-image étant x et y séquentiellement, et M est le nombre total de pixels dans la i-ème région de sous-image ;

dans lequel au moins une valeur de fonctionnalité de texture de la i-ème région de sous-image comprend le contraste, l'homogénéité et l'entropie de la i-ème région de sous-image,

dans lequel la seconde unité d'acquisition est configurée pour:

acquérir le contraste CON de la i-ème région de sous-image selon la GLCM P et par :

$$CON = \sum_{x=1}^{NP} \sum_{y=1}^{NP} p(x, y) \cdot (x - y)^2$$

où x est un nombre de rangée de la GLCM P, y est un nombre de colonne de la GLCM P, NP est le nombre de rangées ou colonnes de la GLCM P et est un élément dans la rangée x et la colonne y de la GLCM P ; $p(x, y)$ acquérir l'homogénéité IDM de la région de sous-image selon la GLCM P et par :

$$IDM = \sum_{x=1}^{NP} \sum_{y=1}^{NP} p(x, y) \cdot \frac{1}{1 + (x - y)^2}$$

où x est un nombre de rangée de la GLCM P, y est un nombre de colonne de la GLCM P, NP est le nombre de rangées ou colonnes de la GLCM P et *p(x, y)* est un élément dans la rangée x et la colonne y de la GLCM P ; et acquérir l'entropie ENT de la région de sous-image selon la GLCM P et par :

$$ENT = -\sum_{x=1}^{NP} \sum_{y=1}^{NP} p(x, y) \cdot \ln p(x, y)$$

où x est un nombre de rangée de la GLCM P, y est un nombre de colonne de la GLCM P, NP est le nombre de rangées ou colonnes de la GLCM P et *p(x, y)* représente le calcul du logarithme naturel de p(x,y).

**5.** Dispositif selon la revendication 6, dans lequel l'unité de division est configurée pour :

extraire un réseau routier principal de l'image VHR SAR selon les caractéristiques de route de l'image SAR VHR ; et
diviser l'image SAR VHR en au moins une région de sous-image selon le réseau routier principal dans l'image SAR VHR.

**6.** Dispositif selon la revendication 6, dans lequel la troisième unité d'acquisition est configurée pour pondérer les niveaux de valeur de caractéristique de texture correspondant aux valeurs de caractéristique de texture respectives de la i-ème région de sous-image par des pondérations préréglées correspondantes et additionner les niveaux de valeur de caractéristique de texture pondérés pour acquérir le niveau de dommage de la i-ème région de sous-image.

Fig. 1

A captured post-event VHR SAR image of the disaster area is
divided into at least one sub-image region — S101

A GLCM corresponding to an *ith* sub-image region is acquired,
and at least one texture feature value of the *ith* sub-image
region is acquired according to the GLCM — S102

Texture feature value levels corresponding to respective
texture feature values of the ith sub-image region are
determined according to a preset ranking strategy — S103

A damage level of the ith sub-image region is acquired
according to the texture feature value levels corresponding to
respective texture feature values of the ith sub-image region
and preset weights of respective texture feature values — S104

Fig. 2

Fig. 3

Fig. 4

**EP 2 990 998 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103761740

- CN 103729853